(19) Europäisches Patentamt
European Patent Office
Office européen des brevets

(11) Numéro de publication: **0 434 501 B1**

# (12) FASCICULE DE BREVET EUROPEEN

(45) Date de publication du fascicule du brevet: **15.11.95**

(51) Int. Cl.6: **C04B 35/80**, C04B 35/56, C08G 77/60, C04B 41/50

(21) Numéro de dépôt: **90403533.4**

(22) Date de dépôt: **11.12.90**

## (54) Procédé d'élaboration d'un matériau composite céramique fibres-matrice.

(30) Priorité: **20.12.89 FR 8916918**

(43) Date de publication de la demande:
**26.06.91 Bulletin 91/26**

(45) Mention de la délivrance du brevet:
**15.11.95 Bulletin 95/46**

(84) Etats contractants désignés:
**CH DE FR GB IT LI NL SE**

(56) Documents cités:

**EP-A- 0 123 934** **EP-A- 0 130 105**
**EP-A- 0 334 577** **FR-A- 2 520 730**
**US-A- 4 722 817** **US-A- 4 814 127**

**CHEMICAL ABSTRACTS, vol. 110, no. 6, mars 1989, Columbus, OH (US); K. NAKANU, p. 337, no. 100541k**

**PATENT ABSTRACTS OF JAPAN, vol. 102, 01 mai 1989**

(73) Titulaire: **OFFICE NATIONAL D'ETUDES ET DE RECHERCHES AEROSPATIALES**
**29, avenue de la Division Leclerc**
**F-92322 Chatillon sous Bagneux (FR)**

(72) Inventeur: **Parlier, Michel**
**46, rue Serpentine,**
**Résidence Chantaiseau**
**F-78960 Voisins Le Bretonneux (FR)**
Inventeur: **Bouillon, Erick**
**Résidence Saint-Genès**
**Appart. 112**
**63 rue Boudaki**
**F-33400 Palence (FR)**
Inventeur: **Muller, Claude**
**33, rue de la Chaudière**
**F-91370 Verrieres le Buisson (FR)**
Inventeur: **Bloch, Bertrand**
**4, square Lagarde**
**F-75005 Paris (FR)**
Inventeur: **Noireaux, Patrick**
**7, rue d'Orléans**
**F-72000 Le Mans (FR)**
Inventeur: **Jamet, Jean**
**1, rue du Leus**
**F-33360 Carignan de Bordeaux (FR)**

(74) Mandataire: **Netter, André et al**
**Cabinet NETTER,**
**40, rue Vignon**
**F-75009 Paris (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.09/3.3.3)

## Description

L'invention concerne l'élaboration de matériaux composites céramiques comprenant une structure fibreuse noyée dans une matrice, et plus particulièrement une structure de fibres de carbure de silicium noyées dans une matrice de carbure de silicium. Les matériaux composites de ce dernier type peuvent être utilisés à température élevée, par exemple comme éléments structuraux de moteurs thermiques.

Un procédé classique pour réaliser un matériau composite fibres-matrice céramique consiste à fritter ensemble des particules de céramique en présence des fibres. Ce procédé n'est pas applicable à l'heure actuelle aux matériaux composites dans lesquels les fibres et la matrice sont en carbure de silicium, appelés ci-après composites SiC-SiC. En effet, le frittage d'une poudre de carbure de silicium nécessite une température de l'ordre de 2000°C, qui altère les propriétés mécaniques des fibres de carbure de silicium connues.

De même, le procédé consistant à pyrolyser un précurseur préalablement introduit dans les vides de la structure fibreuse pour former in situ la matière de la matrice, utilisé en particulier pour les matrices de carbone, ne donne pas de bons résultats dans le cas des matrices en carbure de silicium en raison de la densité théorique élevée de cette substance (3,2 contre 2,26 pour le graphite), qui entraîne un retrait volumique élevé lors de la pyrolyse d'un précurseur du type polysilane, et un vide résiduel important par rapport au volume de la matrice.

Un procédé connu pour l'obtention d'une matrice de carbure de silicium est le procédé d'infiltration chimique en phase vapeur, tel que décrit dans le Brevet français No 2 401 888, qui comporte un traitement thermique à une température de 1000 à 1100°C seulement. Ce procédé consiste à placer la structure fibreuse dans une atmosphère contenant un précurseur du carbure de silicium à l'état gazeux, par exemple du méthyltrichlorosilane, à une température légèrement supérieure à la température de décomposition du précurseur en carbure de silicium.

Le principal inconvénient de cette technique est qu'il faut une durée d'infiltration de plusieurs centaines d'heures pour réaliser un matériau homogène (faible gradient d'épaisseur du revêtement sur les fibres entre le coeur et la surface de la structure fibreuse) et ne pas boucher prématurément la porosité de surface du matériau composite. Malgré les précautions prises, l'opération doit être interrompue plusieurs fois pour écroûter la surface du composite afin de retrouver une porosité de surface suffisante pour la poursuite de l'infiltration gazeuse.

Le but de l'invention est de remédier aux inconvénients précités, et de fournir un procédé beaucoup plus rapide que celui par infiltration chimique en phase vapeur et applicable notamment aux composites SiC-SiC.

L'invention vise un procédé selon les revendications 1 à 13.

L'apport de matière céramique par la décomposition du précurseur liquide assure la liaison entre les particules discrètes et par suite la continuité de la matrice, sans qu'il soit besoin de porter le matériau à la température de frittage de ces particules. Par ailleurs, l'essentiel du volume de la matrice étant représenté par les particules discrètes, le retrait volumique accompagnant la décomposition thermique de la substance liquide ne produit pas des vides résiduels excessifs.

Selon un mode de mise en oeuvre de l'invention, on fait passer à travers la structure fibreuse préétablie une suspension de particules de matière céramique dans un vecteur liquide, jusqu'à introduction du volume voulu de particules dans les vides de la structure, on élimine le vecteur liquide présent dans lesdits vides et on introduit ensuite la substance liquide dans le volume laissé libre par les particules. Avantageusement, lors du passage de la suspension, la structure fibreuse est placée sur un filtre qui retient les particules de matière céramique. De préférence, le diamètre des pores du filtre est du même ordre que le diamètre médian en volume de la poudre, lequel peut être d'environ 1 micromètre.

Quant à la substance liquide, elle est avantageusement introduite par immersion, dans un bain de ladite substance, de la structure fibreuse garnie de particules céramiques.

Ce mode de réalisation s'applique particulièrement à une structure fibreuse comprenant des fibres longues s'étendant de façon continue dans au moins une direction, en particulier à un tissu de fibres qui peut être unidirectionnel, bidirectionnel ou tridirectionnel.

Le polysilane utilisé est tel que décrit dans FR-A-2 642 080, auquel on renvoie expressément pour de plus amples informations.

L'invention prévoit de faire subir aux fibres, avant leur mise en contact avec les particules de carbure de silicium et avec le polysilane liquide, un traitement limitant les interactions physicochimiques entre les fibres et la matrice. En l'absence d'un tel traitement, on assiste notamment à une forte interdiffusion chimique entre les fibres et la matrice qui peut conduire, d'une part à un affaiblissement des propriétés mécaniques de la fibre, et d'autre part à une liaison intense qui ne permet pas le déplacement relatif entre

les fibres et la matrice. Dans ce cas, l'effet de renforcement de la fibre n'existe pas car, en cas de fissures dans la matrice, la fibre casse dans le plan de fissuration, ce qui conduit à une rupture purement fragile. Pour jouer son rôle de renforcement, la fibre doit conserver intactes ses propriétés chimiques et pouvoir dévier une fissure matricielle, conduisant à un comportement mécanique non fragile.

Ce traitement peut être un dépôt d'un matériau intercalaire à cohésion interne anisotrope. En particulier, le carbone donne de bons résultats à cet égard. Le nitrure de bore, dont la structure cristallographique est comparable à celle du graphite, devrait également convenir.

L'invention prévoit également de faire subir aux particules de carbure de silicium présentes dans la structure fibreuse, avant introduction du polysilane liquide, un traitement améliorant leur mouillabilité par celui-ci, et permettant ainsi une bonne imprégnation des pores les plus fins. Ce traitement peut consister à éliminer les groupes hydroxyles présents à la surface des particules par l'action d'un monosilane monohalogéné à l'état gazeux.

Les caractéristiques et avantages de l'invention ressortiront également de la description détaillée donnée ci-après de quelques exemples de réalisation, et des dessins annexés dans lesquels:

- les figures 1, 2 et 3 représentent schématiquement des dispositifs utilisables pour la mise en oeuvre de trois phases successives respectives du procédé selon l'invention;
- la figure 4 est un diagramme représentant la variation de la température et de la pression en fonction du temps au cours de l'une de ces phases;
- les figures 5 et 6 sont des diagrammes montrant respectivement les variations de la viscosité et du temps de gel d'un polysilane liquide en fonction de la température;
- la figure 7 représente une courbe de variation de la température en fonction du temps pour la pyrolyse de ce polysilane liquide;
- les figures 8 et 9 sont des diagrammes d'analyse thermique de ce même polysilane.

On décrit tout d'abord les produits de départ, les appareillages et les modes opératoires utilisés dans les différents exemples.

Le processus mis en oeuvre pour l'élaboration d'un composite SiC-SiC à partir d'un tissu de fibres peut se décomposer en six phases successives:

<u>Première phase</u>

Préparation de la structure fibreuse, incluant la découpe et le nettoyage des fibres.

<u>Deuxième phase</u>

Dépôt d'une couche de carbone sur les fibres par infiltration chimique en phase vapeur.

<u>Troisième phase</u>

Introduction de la poudre céramique dans la structure fibreuse à partir d'une suspension dans un liquide ou barbotine.

<u>Quatrième phase</u>

Traitement chimique de la surface de la poudre par réaction d'échange en phase gazeuse, pour améliorer sa mouillabilité.

<u>Cinquième phase</u>

Imprégnation par le polysilane liquide.

<u>Sixième phase</u>

Traitement thermique de réticulation et de pyrolyse du polysilane.

Ces différentes phases, telles que décrites en détail dans la suite, peuvent être modifiées ou remplacées par des traitements différents pour adapter le procédé à d'autres types de matériaux composites fibres-matrice.

On a utilisé dans les exemples des fibres de carbure de silicium produites par la société NIPPON CARBON sous la référence NICALON NLM202, d'un diamètre moyen de 13 micromètres, sous forme de

fils contenant 500 fibres. On a réalisé des structures fibreuses unidirectionnelles formées de tels fils coupés et alignés parallèlement les uns aux autres. On a également utilisé des tissus bidirectionnels et tridirectionnels formés de ces mêmes fils orientés selon deux ou trois directions orthogonales, commercialisés par la société BROCHIER sous les références 2D-E2140 et 3D-E2319.

Le tissu tridimensionnel ci-dessus comporte un fil de liage à base de lactose, qu'on a éliminé, dans la première phase du processus, par dissolution dans l'eau à 80°C sous agitation. Par ailleurs, toutes les fibres comportent un ensimage à base de résine acrylique, qu'on élimine par immersion dans un mélange équivolumique d'acétone et d'alcool isopropylique agité par intermittence au moyen d'une cuve à ultrasons.

Il est également possible de partir d'un tissu "pseudo-unidirectionnel" comportant une fraction minoritaire de fibres ou de fils de liaison orientés transversalement à la direction principale des fibres. Si ces fils de liaison sont en une substance étrangère, ils peuvent être éliminés eux aussi lors de la première phase.

La seconde phase utilise comme précurseur un hydrocarbure aliphatique gazeux choisi parmi les hydrocarbures saturés en $C_1$ à $C_4$ et les hydrocarbures éthyléniques en $C_2$ à $C_4$. On a choisi l'éthylène qui permet d'obtenir, par un traitement d'infiltration à 1000°C sous 4000 Pa, un dépôt de carbone d'une épaisseur uniforme comprise entre 200 et 300 nanomètres dans tout le volume du tissu tridimensionnel d'une épaisseur d'environ 7 mm. Le temps de traitement pour obtenir cette épaisseur dépend de la surface développée des fibres. A titre d'exemple, il est de 70 mn pour une surface développée de tissu de 45 000 cm2, disposée dans une chambre ayant une surface rayonnante de 1 500 cm2, le débit d'éthylène étant de 200 cm3 par minute ramené aux conditions normales de température et de pression.

La poudre de carbure de silicium utilisée est fournie par la société STARCK sous la référence B10. Son diamètre médian en volume est d'environ 1 micromètre, c'est-à-dire que les grains d'un diamètre supérieur à cette valeur représentent la moitié du volume réel de la poudre. Celle-ci est mise en oeuvre sous forme d'une suspension dans l'eau ou dans l'acétone ayant une concentration de 200 g/litre.

On souhaite généralement que la porosité du matériau composite final soit très faible. Il est alors avantageux que la densité apparente $d_c$ de la poudre céramique dans la structure fibreuse, c'est-à-dire le rapport entre la masse de la poudre et le volume laissé libre par la structure fibreuse, y compris celui occupé par la poudre, soit la plus élevée possible. On peut exprimer l'efficacité du remplissage par le rapport $\eta = d_c/d_p$ entre cette densité apparente $d_c$ et la densité apparente d'une masse de poudre obtenue dans les mêmes conditions de filtration mais en l'absence de structure fibreuse. Plusieurs paramètres agissent sur $\eta$ et sur $d_c$: la granulométrie de la poudre vis-à-vis du diamètre moyen $d_f$ des fibres, la texture du tissage, la forme des particules, le type d'interaction dans la barbotine et enfin la porosité du système filtrant. Plus particulièrement, le diamètre médian $d_{50}$ de la poudre doit de préférence être tel que $10 \leq d_f/d_{50} \leq 30$. Une poudre idéale formée de grains sphériques de diamètre uniforme permettrait d'atteindre une densité apparente maximale dans un rapport de 0,74 avec la densité théorique du matériau, c'est-à-dire la densité du cristal parfait. En pratique, pour des particules de forme irrégulière et de taille non uniforme, ce rapport est compris entre 0,5 et 0,63, les valeurs les plus élevées étant obtenues par filtration en utilisant une suspension homogène et stable dans un liquide servant de lubrifiant. La stabilité et l'homogénéité de la barbotine sont déterminées par la résultante des forces interparticulaires, qui sont les forces d'attraction de Van der Waals et les forces de répulsion électrostatique et d'encombrement stérique. En milieu aqueux, le réglage des forces de répulsion peut être obtenu en agissant sur le potentiel électrique de surface des particules (potentiel zéta), déterminé par la double couche électrique formée, d'une part par les ions absorbés en surface et d'autre part par des ions mobiles distribués de manière diffuse, et qui détermine à son tour l'importance de la répulsion électrostatique. En ajustant le pH du milieu, on peut atteindre un potentiel zéta répulsif de quelques dizaines de millivolts. En milieu organique, la stabilité peut être obtenue en modifiant l'encombrement stérique des particules par greffage à leur surface de polymères à chaines courtes et solubles dans le milieu. Quant au système filtrant, ses pores ont avantageusement un diamètre du même ordre que $d_{50}$.

Dans les exemples, la suspension aqueuse a été portée à pH 9 (potentiel zéta -60 millivolts) en ajoutant de l'ammoniaque. La suspension acétonique a été stabilisée au moyen d'un polymère fourni par IMPERIAL CHEMICAL INDUSTRIES sous la référence KD1, utilisé à raison de 3% en masse par rapport à la poudre. La densité apparente $d_p$ est de 1,55 et 2,05 en utilisant respectivement ces deux barbotines.

Le dispositif de filtration utilisé est représenté schématiquement à la figure 1. Il comprend un moule formé d'une partie inférieure 1 et d'une partie supérieure 2, la partie 1 définissant une cavité limitée vers le bas par un fond perforé 3. La partie 1 du moule, y compris le fond 3, forme une portion de la paroi d'une enceinte étanche 4. Le fond 3 est recouvert d'une plaque en silice frittée 5 ayant des pores de 90 à 150 micromètres, sur laquelle est posé à son tour un filtre en fibres de verre ayant des ouvertures de 0,7 micromètre, fourni par la société WHATMAN sous la référence GF/F. La structure fibreuse 6 repose sur le filtre, et est recouverte d'une seconde grille perforée 7 appartenant à la partie 2 du moule et limitant vers le

haut la cavité de celui-ci. Dans le cas d'une structure fibreuse unidirectionnelle ou bidirectionnelle, les fibres sont disposées horizontalement et la hauteur de la structure, et par suite le taux volumique de fibres dans le produit final, pour une quantité donnée de fibres, sont réglés au moyen de cales 8 interposées entre les parties 1 et 2.

Dans les exemples comportant une structure fibreuse unidirectionnelle, on dispose sur le filtre environ 15 g de fibres alignées d'une longueur de 6,6 cm (longueur du moule rectangulaire, sa largeur étant de 4 cm), et on règle la hauteur du moule à 5 mm, ce qui correspond à une fraction volumique d'environ 45% pour une masse volumique des fibres de 2,55 g/cm3. Pour obtenir une structure fibreuse bidirectionnelle, on empile 15 plis ou nappes de tissu découpés aux dimensions du moule. Le taux volumique de fibres est de 30%, les fibres étant orientées par moitié en volume dans les deux directions orthogonales du plan du tissu. Enfin, le tissu tridirectionnel, dont l'épaisseur est d'environ 7 mm, présente un taux volumique de fibres d'environ 45%, 20% environ des fibres étant orientées selon chacune des deux directions orthogonales horizontales, et 5% dans la direction verticale.

La filtration s'effectue en versant la barbotine 9 sur la grille 7 et en appliquant une pression de gaz de 0,5 à 1,5 MPa dans l'enceinte 4, et en faisant le vide au-dessous du fond 3, la pression étant limitée par la pression de vapeur saturante de la phase liquide de la barbotine.

La quatrième phase utilise le dispositif représenté schématiquement à la figure 2. La structure fibreuse 6 garnie de particules de carbure de silicium est posée sur une grille 10 dans une enceinte 11. Cette enceinte communique avec un réservoir 12 contenant 7 ml de triméthylchlorosilane 13. Le réservoir 12 est immergé dans de l'azote liquide 14 contenu dans un récipient de Dewar 15. On fait le vide dans l'enceinte 11 au moyen d'une conduite 16 et on la maintient sous une pression ne dépassant pas 5 Pa pendant 4 heures, après quoi on isole l'enceinte en fermant une vanne 17 montée sur la conduite 16. On retire alors le récipient 15 et le triméthylchlorosilane, dont la température d'ébullition à la pression atmosphérique est de 57,3 ° C, s'évapore progressivement et envahit l'enceinte 11. On laisse la structure 6 au moins 24 heures en contact avec ce gaz. Celui-ci réagit avec les groupes hydroxyles présents à la surface des particules de carbure de silicium selon la réaction d'échange suivante:

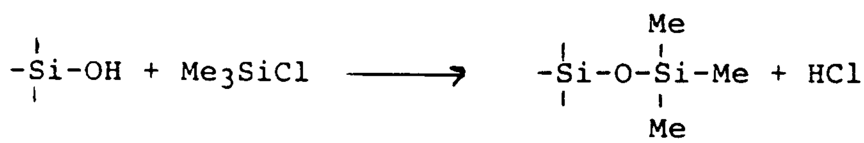

Cette réaction élimine les liaisons Si-OH, qui sont autant de sites propices à l'accrochage des fonctions hydrogénosilanes du polysilane liquide qui sera introduit dans la cinquième phase, et nuisant par conséquent à une imprégnation complète. Ce traitement est également applicable à d'autres poudres de composés de silicium susceptibles de présenter en surface des liaisons Si-OH, en particulier de nitrure de silicium $Si_3N_4$.

Le polysilane liquide utilisé pour l'imprégnation est obtenu par le procédé décrit dans la Demande de brevet précitée No 89 00764, en partant de 76% de méthylvinyldichlorosilane, 24% de méthyldichlorosilane et 40% de triméthylchlorosilane en moles.

L'appareillage d'imprégnation, illustré à la figure 3, comprend un autoclave 18 à l'intérieur duquel l'échantillon 19 est suspendu à une tige mobile 20 et qui contient un réservoir de polysilane 21.

L'autoclave est soumis au cycle température-pression indiqué à la figure 4, les courbes en trait plein et en pointillé représentant respectivement les variations de la température et de la pression en fonction du temps. Au temps 0, on fait le vide à travers une conduite 22 munie d'une vanne 23, pour établir une pression résiduelle inférieure ou égale à $10^{-1}$Pa. La montée en température commence au bout de 2 heures, au moyen d'un bain d'huile thermostaté 24. La viscosité du polymère et son temps de gel, c'est-à-dire le temps qu'il lui faut pour atteindre, par suite de la réaction de réticulation, un état gélifié où il ne coule plus, varient en fonction de la température selon les courbes des figures 5 et 6 respectivement, tracées en coordonnées logarithmiques. Une température de 160 ° C correspond à une viscosité d'environ 30 centipoises, permettant une imprégnation suffisante avant le temps de gel. Lorsque cette température est atteinte, on plonge la structure 19 dans le polymère en déplaçant la tige 20. Après 5 mn de palier à 160 ° C, on ferme la vanne 23 et on applique une pression régulée de 5 MPa d'azote à travers une conduite 25 munie d'une vanne 26. Après un palier de 115 mn à cette pression, la température étant toujours de 160 ° C, on élève de nouveau la température, à une vitesse de 2 ° C par minute, jusqu'à 250 ° C, cette température étant maintenue pendant 90 mn. On refroidit ensuite l'autoclave, puis on le remet à l'air libre.

A l'issue de ce traitement, la structure fibreuse imprégnée et enrobée de polymère résiduel se détache facilement des parois du réservoir.

Le cycle thermique décrit ci-dessus se déduit des courbes d'analyse thermique différentielle de la figure 8, établies pour trois vitesses de montée en température différentes. L'élévation de température peut être rapide (10 °C par minute jusqu'à 200 °C). Pour la réticulation, la vitesse est réduite à 2 °C par minute jusqu'à 250 °C où on effectue un palier.

La pyrolyse du polysilane (sixième phase) s'effectue au four sous balayage d'azote selon le cycle thermique représenté par la courbe de la figure 7, comme établi en fonction des courbes d'analyse thermogravimétrique de la figure 1, de façon à éviter un débit massique instantané de perte de matière trop élevé, qui créerait des contraintes mécaniques dans le produit. A cet effet, la température a été élevée jusqu'à 1150 °C environ sur une durée de 34 heures, à une vitesse variable telle que le débit de matière soit sensiblement constant et égal à 1%/h par rapport à la masse du polymère réticulé. Cette durée pourrait être ramenée à 24 heures, la température maximale de traitement étant d'au moins 1000 °C.

La figure 9 représente trois courbes d'analyse thermique du polysilane, une courbe d'analyse thermique différentielle, une courbe d'analyse thermogravimétrique et une courbe d'analyse thermogravimétrique dérivée, tracées respectivement en trait interrompu court, en trait mixte et en trait plein. On retrouve dans la première de ces courbes, comme dans celles de la figure 8, un premier pic correspondant à la réticulation et un second pic correspondant à la pyrolyse. Sur la courbe d'analyse thermogravimétrique on a indiqué les pourcentages de masse résiduelle après le pic de réticulation (98% à 300 °C) et après le pic de pyrolyse (64% vers 700 °C). On voit en particulier que la réticulation s'effectue pratiquement sans perte de masse.

Une caractéristique importante du carbure de silicium obtenu est sa composition chimique. D'une façon générale, le carbure de silicium obtenu par pyrolyse d'un polysilane n'est pas pur. Il contient un peu d'oxygène en plus du silicium et du carbone. On a l'habitude de caractériser sa composition chimique par les taux massiques de SiC, de silice et de carbone calculés en supposant arbitrairement que l'élément silicium est présent sous forme de SiC et de silice, l'élément carbone sous forme de SiC et sous forme libre, et l'élément oxygène sous forme de silice. Ces taux sont respectivement de 68%, 8% et 24% pour le carbure de silicium obtenu par pyrolyse du polymère de vinylsilane décrit ci-dessus, contre 66%, 17% et 17% pour les fibres NICALON. Ce taux de carbone peut être modulé en jouant sur la formule du mélange monomère de départ. En particulier, le remplacement du triméthylchlorosilane par un halogénure de benzyle, comme prévu dans la Demande de brevet mentionnée plus haut, augmenterait encore le taux de carbone.

Les caractéristiques particulières des différents exemples sont résumées dans les Tableaux 1 et 2.

Exemples 1 à 6

Ces exemples utilisent un tissu de fibres tridirectionnel, et font l'objet du Tableau 1. Ces exemples diffèrent les uns des autres par le dépôt de carbone sur les fibres (deuxième phase) et par les conditions de filtration (troisième phase). Les densités apparentes et les porosités sont calculées en mesurant le volume apparent du matériau composite par immersion dans un liquide. Les rapports de pyrolyse indiqués dans le Tableau sont les rapports entre la masse (ou le volume) du carbure de silicium obtenu par pyrolyse du polysilane liquide et la masse (ou le volume) de ce dernier. A côté de la résistance à la rupture mesurée à l'essai de flexion trois points, on a indiqué le volume relatif occupé dans le matériau composite par les fibres sollicitées en raison de leur orientation. L'essai est réalisé dans les conditions suivantes: dimensions de l'éprouvette :

(L x l x é) 65 x 5 x 2,5 mm, espacement des supports 50 mm, charge appliquée au milieu.

Dans les exemples 1 et 2, la deuxième phase a été omise. Il en résulte une liaison trop forte entre les fibres et la matrice, et une rupture purement fragile (rupture dans la partie linéaire de la courbe contrainte-déformation en régime élastique) sans effet de renforcement des fibres. En jouant sur les conditions de filtration, on obtient pour ces deux exemples des densités apparentes de poudre différentes.

Dans l'exemple 3, la durée du dépôt dans la deuxième phase est portée à 120 mn, conduisant à une épaisseur de carbone de 500 à 700 nanomètres. Il en résulte une imprégnation médiocre en polysilane liquide due à des pontages entre les revêtements des différentes fibres. La porosité résiduelle est grande et la densité apparente du produit final est faible par rapport à celles obtenues avec une épaisseur de carbone de 200 à 300 nanomètres (exemples 4 à 6), réalisée avec une durée de dépôt de 70 mn.

Dans l'exemple 5, l'épaisseur du moule de filtration est plus grande que dans l'exemple 4 (6,5 mm au lieu de 5,5), ce qui conduit à une densité apparente $d_c$ et à une densité apparente du produit final plus élevées.

La densité apparente $d_c$ est encore améliorée dans l'exemple 6, par rapport à l'exemple 5, en utilisant une barbotine acétonique. Mais les propriétés du produit final ne sont pas sensiblement différentes.

Les exemples 7 à 9 font l'objet du Tableau 2, dans lequel on retrouve certaines des caractéristiques explicitées à propos du Tableau 1. Une barbotine aqueuse est utilisée dans ces trois exemples.

Dans l'exemple 7, le tissu de fibres est bidirectionnel. La porosité à l'état pyrolysé est inférieure à celle de l'exemple 5, pour une densité apparente équivalente. Les propriétés mécaniques sont sensiblement proportionnelles au taux volumique de fibres sollicitées pour ces deux exemples.

Dans l'exemple 8, on part d'une structure fibreuse unidirectionnelle, ce qui diminue encore la porosité à l'état pyrolysé et augmente la densité apparente. Les propriétés mécaniques sont légèrement inférieures, rapportées au taux de fibres sollicitées.

L'exemple 9 est un exemple comparatif dans lequel on n'utilise pas de structure fibreuse, la barbotine étant filtrée au demeurant dans les mêmes conditions que dans les exemples précédents. On obtient une porosité à l'état pyrolysé et une densité apparente très proches de celles de l'exemple 8, indiquant que la structure fibreuse unidirectionnelle permet la réalisation d'une matrice ayant des propriétés sensiblement optimales.

Comme il ressort de l'exposé ci-dessus, l'invention n'est pas limitée à l'élaboration de matériaux composites SiC-SiC.

Par ailleurs, les fibres longues peuvent être remplacées par des fibres courtes, éventuellement mélangées à la poudre céramique avant établissement de la structure fibreuse. Inversement, cette poudre peut être introduite en mélange avec le précurseur liquide dans un tissu de fibres, l'ensemble étant ensuite traité thermiquement sous charge.

Tableau 1

| Ex. | Conditions de filtration | | | | | Densité apparente de la poudre SiC dans le substrat (dc) | Porosité ouverte (% volumique) après | | Densité apparente du matériau composite | Rapports de pyrolyse | | Essai de flexion 3 points | |
|---|---|---|---|---|---|---|---|---|---|---|---|---|---|
| | Epaisseur du moule (mm) | Barbotine 200 g/l | | Pression | Temps | | Réticulation | Pyrolyse | | Massique | Volumique | Taux vol. théorique de fibres sollicitées (%) | Résistance (MPa) |
| | | Milieu | Vol. (ml) | (MPa) | (h) | | | | | (%) | (%) | | |
| 1 | 5,5 | Aqueux | 100 | 0,7 | 2 | 1,43 ($\eta$ = 0,92) | 5,3 | 25 | 2 | 57 | 22 | 20 | 40 ± 10 |
| 2 | 6,5 | Aqueux | 100 | 0,2 | 5 | 1,29 ($\eta$ = 0,86) | 1,9 | 25 | 1,98 | 72 | 29 | 20 | 70 ± 20 |
| 3 | 5,5 | Aqueux | 100 | 0,7 | 5 | 1,35 ($\eta$ = 0,87) | 12,3 | 31 | 1,77 | 65 | 26 | 20 | - |
| 4 | 5,5 | Aqueux | 100 | 0,7 | 3 | 1,35 ($\eta$ = 0,87) | 2,7 | 26 | 2,01 | 72 | 29 | 20 | 150 ± 30 |
| 5 | 6,5 | Aqueux | 120 | 0,7 | 3 | 1,48 ($\eta$ = 0,98) | 2,2 | 22 | 2,17 | 65 | 26 | 20 | 240 ± 50 |
| 6 | 6,5 | Acétonique | 120 | 0,7 | 3 | 1,65 ($\eta$ = 0,80) | - | 20 | 2,14 | - | - | 20 | 250 ± 70 |

Tableau 2

| Exemple | Conditions de filtration | | | | Porosité ouverte (% volumique) après | | Densité apparente du matériau composite | Essai de flexion 3 points | |
|---|---|---|---|---|---|---|---|---|---|
| | Epaisseur du moule (mm) | Volume de barbotine (ml) | Pression (MPa) | Temps (h) | Réticulation | Pyrolyse | | Taux volumique de fibres sollicitées (%) | Résistance (MPa) |
| 7 | 6,5 | 130 | 0,7 | 3,5 | 2,15 | 13 | 2,20 | 15 | 190 ± 30 |
| 8 | 5 | 120 | 0,7 | 5 | 2,20 | 8 | 2,26 | 45 | 490 ± 50 |
| 9 | 5 | 110 | 0,7 | 3 | 0,70 | 7 | 2,30 | - | 110 ± 25 |

## Revendications

1. Procédé d'élaboration d'un matériau composite céramique comprenant une structure fibreuse en carbure de silicium noyée dans une matrice, procédé dans lequel on introduit dans les vides de la structure fibreuse d'une part des particules discrètes de matière céramique, d'autre part une substance liquide propre à être transformée par traitement thermique en matière céramique, et on chauffe l'ensemble pour transformer ladite substance et relier entre elles les particules discrètes par la matière céramique ainsi obtenue en formant une matrice continue, caractérisé en ce que la matrice est en carbure de silicium et que ladite substance liquide est un polysilane copolymère liquide de faible viscosité à température ordinaire et thermodurcissable, comportant des groupes éthyléniques et des

atomes d'hydrogène liés à des atomes de silicium, propre à être transformé en carbure de silicium après réticulation, ce polysilane étant obtenu en faisant réagir deux monomères ayant respectivement les formules suivantes :

$R(CR'_2 = CR')SiX_2$ (I)

$RHSiX_2$ (II)

dans lesquelles les symboles R représentent des radicaux hydrocarbonés identiques ou différents, les symboles X représentent des atomes d'halogène identiques ou différents, et les symboles R' représentent chacun un atome d'hydrogène ou un radical hydrocarboné, et au moins un monomère monohalogéné avec du sodium fondu dans un solvant organique sous forme d'un mélange composé essentiellement de toluène et de dioxanne, le rapport $r_1$ du nombre de moles du monomère (I) au nombre de moles du monomère (II) étant compris entre 2 et 3,3 environ et le rapport $r_2$ du nombre de moles du monomère monohalogéné au nombre de moles des monomères (I) et (II) étant compris entre 0,2 et 0,8 environ, le mélange refroidi résultant de la réaction de polymérisation, contenant principalement du polysilane, du sodium résiduel, de l'halogénure de sodium et le solvant étant séparé par filtration en une phase liquide contenant le solvant et la fraction majoritaire de faible masse moléculaire du polysilane à l'état liquide et/ou dissous, et une phase solide contenant le sodium, l'halogénure de sodium et le cas échéant la fraction de masse moléculaire élevée du polysilane, le polysilane étant récupéré à partir de la phase liquide et la phase solide étant traitée pour oxyder le sodium résiduel.

**2.** Procédé selon la revendication 1, caractérisé en ce qu'on fait passer à travers la structure fibreuse préétablie (6) une suspension (9) de particules de matière céramique dans un vecteur liquide, jusqu'à introduction du volume voulu de particules dans les vides de la structure, qu'on élimine le vecteur liquide présent dans lesdits vides, et qu'on introduit ensuite le polysilane liquide (21) dans le volume laissé libre par les particules.

**3.** Procédé selon la revendication 2, caractérisé en ce qu'on fait subir aux particules de carbure de silicium présentes dans la structure fibreuse, avant introduction du polysilane liquide, un traitement améliorant leur mouillabilité par celui-ci.

**4.** Procédé selon la revendication 3, caractérisé en ce qu'on élimine les groupes hydroxyles présents à la surface des particules par l'action d'un monosilane monohalogéné à l'état gazeux.

**5.** Procédé selon l'une des revendications précédentes, caractérisé en ce qu'on introduit le polysilane liquide par immersion, dans un bain dudit polysilane (21), de la structure fibreuse (19) garnie de particules céramiques.

**6.** Procédé selon l'une des revendications précédentes, caractérisé en ce que la structure fibreuse comprend des fibres longues s'étendant de façon continue dans au moins une direction.

**7.** Procédé selon la revendication 6, caractérisé en ce qu'on fait subir aux fibres, avant leur mise en contact avec les particules de carbure de silicium et avec le polysilane liquide, un traitement limitant les interactions physicochimiques entre les fibres et la matrice.

**8.** Procédé selon la revendication 7, caractérisé en ce que le traitement limitant les interactions est un dépôt d'un matériau intercalaire à cohésion interne anisotrope.

**9.** Procédé selon la revendication 8, caractérisé en ce que le matériau intercalaire est le carbone.

**10.** Procédé selon l'une des revendications précédentes, caractérisé en ce que les monomères utilisés pour l'obtention du polysilane, et leurs fractions molaires respectives, sont les suivants :

| | |
|---|---|
| $CH_3(CH_2=CH)SiCl_2$ | 0,76 |
| $CH_3HSiCl_2$ | 0,24 |
| $(CH_3)_3SiCl$ | 0,40 |

**11.** Procédé selon l'une des revendications précédentes, caractérisé en ce que le polysilane a une viscosité inférieure à 20 poises environ à température ordinaire et inférieure à 1 poise environ à 100 °C.

**12.** Procédé selon l'une des revendications précédentes, caractérisé en ce que le polysilane est traité à une température de 1000 °C environ pour l'obtention de carbure de silicium.

**13.** Procédé selon l'une des revendications précédentes, caractérisé en ce que le traitement de transformation du polysilane en carbure de silicium est précédé d'un traitement de réticulation à une température plus basse.

**Claims**

**1.** Process for the manufacture of a ceramic composite material comprising a silicon carbide fibrous structure embedded in a matrix, a process in which are introduced into voids in the fibrous structure on the one hand discrete particles of ceramic material, and on the other hand a liquid substance that can be converted by heat treatment into a ceramic material, the whole being heated to convert the said substance and to bind together the discrete particles by the ceramic material thus obtained by forming a continuous matrix, characterized in that the matrix is made of silicon carbide and the said liquid substance is a thermosetting liquid polysilane copolymer with a low viscosity at ordinary temperatures, having ethylenic groups and hydrogen atoms attached to silicon atoms, capable of being converted to silicon carbide following crosslinking, this polysilane being obtained by reacting two monomers having the following formulae respectively :

$R(CR'_2=CR')SiX_2$ (I)

$RHSiX_2$ (II)

in which the symbols R represent identical or different hydrocarbon radicals, the symbols X represent identical or different halogen atoms and the symbols R' each represent a hydrogen atom or a hydrocarbon radical, and at least one mono-halogenated monomer with molten sodium in an organic solvent in the form of a mixture composed essentially of toluene and dioxane, the ratio $r_1$ of the number of moles of monomer (I) to the number of moles of monomer (II) being between about 2 and 3.3 and the ratio $r_2$ of the number of moles of monohalogenated monomer to the number of moles of monomer (I) and (II) being between about 0.2 and 0.8, the cooled mixture resulting from the polymerization reaction, containing mainly polysilane, residual sodium, sodium halide and solvent being separated by filtration into a liquid phase containing the solvent and the mainly low molecular mass fraction of the polysilane in the liquid and/or dissolved state, and a solid phase containing sodium, sodium halide and as the case may be the high molecular mass fraction of the polysilane, the polysilane being recovered from the liquid phase and the solid phase being treated to oxidize the residual sodium.

**2.** Process according to claim 1, characterized in that a suspension (9) of particles of ceramic material in a carrier liquid is caused to pass through the preestablished fibrous structure (6) until the desired volume of particles is introduced into the voids in the structure, the carrier liquid present in the said voids is removed, and the liquid polysilane (21) is then introduced into the volume left free by the particles.

**3.** Process according to claim 2, characterized in that the particles of silicon carbide present in the fibrous structure are subjected, before introduction of the liquid polysilane, to a treatment improving their wettability by the latter.

**4.** Process according to claim 3, characterized in that the hydroxyl groups present on the surface of the particles are eliminated by the action of a mono-halogenated monosilane in the gaseous state.

5. Process according to one of the preceding claims, characterized in that the liquid polysilane is introduced by immersing the fibrous structure (19) furnished with ceramic particles, in a bath of the said polysilane (21).

6. Process according to one of the preceding claims, characterized in that the fibrous structure comprises long fibres extending continuously in at least one direction.

7. Process according to claim 6, characterized in that the fibres are subjected, before being put into contact with the particles of silicon carbide and with the liquid polysilane, to a treatment limiting physicochemical interactions between the fibres and the matrix.

8. Process according to claim 7, characterized in that the treatment limiting interactions is deposition of an interposed material with anisotropic internal cohesion.

9. Process according to claim 8, characterized in that the interposed material is carbon.

10. Process according to one of the preceding claims, characterized in that the monomers used for obtaining the polysilane, and their respective molar fractions, are as follows :

| | |
|---|---|
| $CH_3(CH_2=CH)SiCl_2$ | 0.76 |
| $CH_3HSiCl_2$ | 0.24 |
| $(CH_3)_3SiCl$ | 0.40 |

11. Process according to one of the preceding claims, characterized in that the polysilane has a viscosity of less than about 20 poise at ordinary temperatures and less than about 1 poise at 100 °C.

12. Process according to one of the preceding claims, characterized in that the polysilane is treated at a temperature of about 1000 °C to obtain silicon carbide.

13. Process according to one of the preceding claims, characterized in that the treatment for converting polysilane into silicon carbide is preceded by a crosslinking treatment at a lower temperature.

## Patentansprüche

1. Verfahren zum Herstellen eines keramischen Verbundwerkstoffs, der eine Faserstruktur aus Siliciumcarbid aufweist, die in eine Matrix eingebettet ist, wobei man in die Hohlräume der Faserstruktur einerseits diskrete Partikel aus keramischem Material, andererseits eine flüssige Substanz einführt, die geeignet ist, durch thermische Behandlung in keramisches Material überführt zu werden, und man die Anordnung erhitzt, um die genannte Substanz zu überführen und die diskreten Partikel durch das so erhaltene keramische Material miteinander zu verbinden, indem eine durchgehende Matrix erzeugt wird, **dadurch gekennzeichnet**, daß die Matrix aus Siliciumcarbid besteht und die genannte flüssige Substanz ein flüssiges Polysilancopolymer ist, das bei Umgebungstemperatur geringe Viskosität aufweist und das thermisch härtbar ist und Ethylengruppen und Wasserstoffatome enthält, die an Siliciumatome gebunden sind, um nach Vernetzung in Siliciumcarbid umgewandelt zu werden, wobei dieses Polysilan erhalten wird, indem man zwei Monomere der folgenden Formeln miteinander reagieren läßt:

$r(CR'_2=CR')SiX_2$ (I)

$RHSiX_2$ (II)

wobei die Symbole R identische oder unterschiedliche Kohlenwasserstoffradikale darstellen, die Symbole X identische oder unterschiedliche Halogenatome darstellen und die Symbole R' jeweils ein Wasserstoffatom oder ein Kohlenwasserstoffradikal repräsentieren, und wenigstens ein Monohalogenid-Monomer mit in einem organischen Lösungsmittel in Form einer Mischung aus im wesentlichen Toluol und Dioxan geschmolzenem Natrium, wobei das Verhältnis $r_1$ der Anzahl der Mole des Monomeren (I)

zur Anzahl der Mole des Monomeren (II) zwischen etwa 2 und etwa 3,3 liegt und das Verhältnis $r_2$ der Anzahl der Mole und des Monohalogenmonomeren zur Anzahl der Mole der Monomeren (I) und (II) zwischen etwa 0,2 und etwa 0,8 liegt, wobei die aus der Polimerisationsreaktion resultierende, wieder abgekühlte Mischung, die hauptsächlich Polysilan, Natriumrest, Natriumhalogenid und das Lösungsmittel enthält, durch Filtration in flüssiger Phase, die das Lösungsmittel und die Hauptfraktion kleiner Molokularmasse des Polysilans in flüssigem und/oder gelöstem Zustand und eine feste Phase, die das Natrium, das Natriumhologenid und ggf. die Fraktion höherer Molokularmasse des Polysilans enthält, abgetrennt wird, wobei das Polysilan aus der flüssigen Phase wiedergewonnen wird und die feste Phase bearbeitet wird, um das Restnatrium zu oxidieren.

**2.** Verfahren nach Anspruch 1, **dadurch gekennzeichnet**, daß man über die vorgefertigte Faserstruktur (6) eine Suspension (9) aus Keramikmaterialpartikeln in einem flüssigen Träger bis zur Einführung des gewünschten Partikelvolumens in die Hohlräume der Struktur passieren läßt, daß man den flüssigen, in den Hohlräumen vorhandenen Träger beseitigt und man dann das flüssige Polysilan (21) in das von den Partikeln zurückgelassene freie Volumen einleitet.

**3.** Verfahren nach Anspruch 2, **dadurch gekennzeichnet**, daß man die in der Faserstruktur vorhandenen Siliciumcarbidpartikel vor der Einleitung des flüssigen Polysilans einer Behandlung unterwirft, die ihre Benetzbarkeit verbessert.

**4.** Verfahren nach Anspruch 3, **dadurch gekennzeichnet**, daß man die an der Oberfläche der Partikel vorhandenen Hydroxylgruppen durch Einwirkung eines monohalogenierten Monosilans in gasförmigem Zustand beseitigt.

**5.** Verfahren nach einem der vorhergehenden Ansprüche, **dadurch gekennzeichnet**, daß man das flüssige Polysilan durch Immersion der mit den Keramikpartikeln versetzten Faserstruktur (9) in ein Polysilanbad (21) einführt.

**6.** Verfahren nach einem der vorhergehenden Ansprüche, **dadurch gekennzeichnet**, daß die Faserstruktur lange Fasern enthält, die sich in wenigstens einer Richtung durchgehend erstrecken.

**7.** Verfahren nach Anspruch 6, **dadurch gekennzeichnet**, daß man die Fasern vor ihrer Inberührungbringung mit den Siliciumcarbidpartikeln und dem flüssigen Polysilan einer Behandlung unterwirft, die die physikalisch-chemischen Wechselwirkungen zwischen den Fasern und der Matrix einschränkt.

**8.** Verfahren nach Anspruch 7, **dadurch gekennzeichnet**, daß die Behandlung, die die Wechselwirkungen einschränkt, eine Einbringung eines Einlagematerials mit anisotroper interner Kohesion ist.

**9.** Verfahren nach Anspruch 8, **dadurch gekennzeichnet**, daß das Einlagematerial Kohlenstoff ist.

**10.** Verfahren nach einem der vorhergehenden Ansprüche, **dadurch gekennzeichnet**, daß die für Herstellung des Polysilans und ihrer betreffenden molaren Fraktionen verwendeten Monomere die folgenden sind:

| | |
|---|---|
| $CH_3(CH_2=CH)SiCl_2$ | 0,76 |
| $CH_3HSiCl_2$ | 0,24 |
| $(CH_3)_3SiCl$ | 0,40 |

**11.** Verfahren nach einem der vorhergehenden Ansprüche, **dadurch gekennzeichnet**, daß das Polysilan eine Viskosität hat, die bei Umgebungstemperatur eine Viskosität unter 20 Poise und bei 100 °C eine Viskosität von weniger als 1 Poise hat.

**12.** Verfahren nach einem der vorhergehenden Ansprüche**, dadurch gekennzeichnet**, daß das Polysilan bei einer Temperatur von etwa 1000 °C behandelt wird, um das Siliciumcarbid zu erhalten.

13. Verfahren nach einem der vorhergehenden Ansprüche, **dadurch gekennzeichnet**, daß der Umwandlungsbehandlung des Polysilans in Siliciumcarbid eine Vernetzungsbehandlung bei tieferer Temperatur vorangeht.

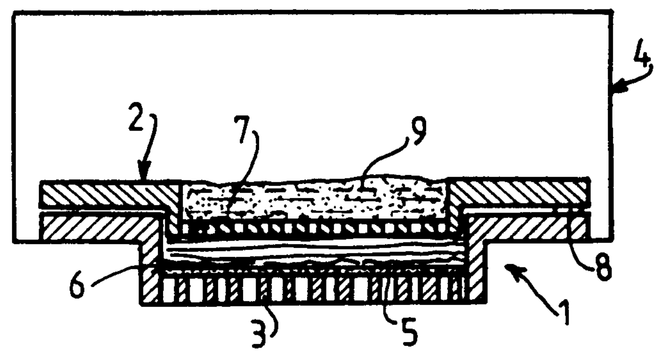


FIG.1

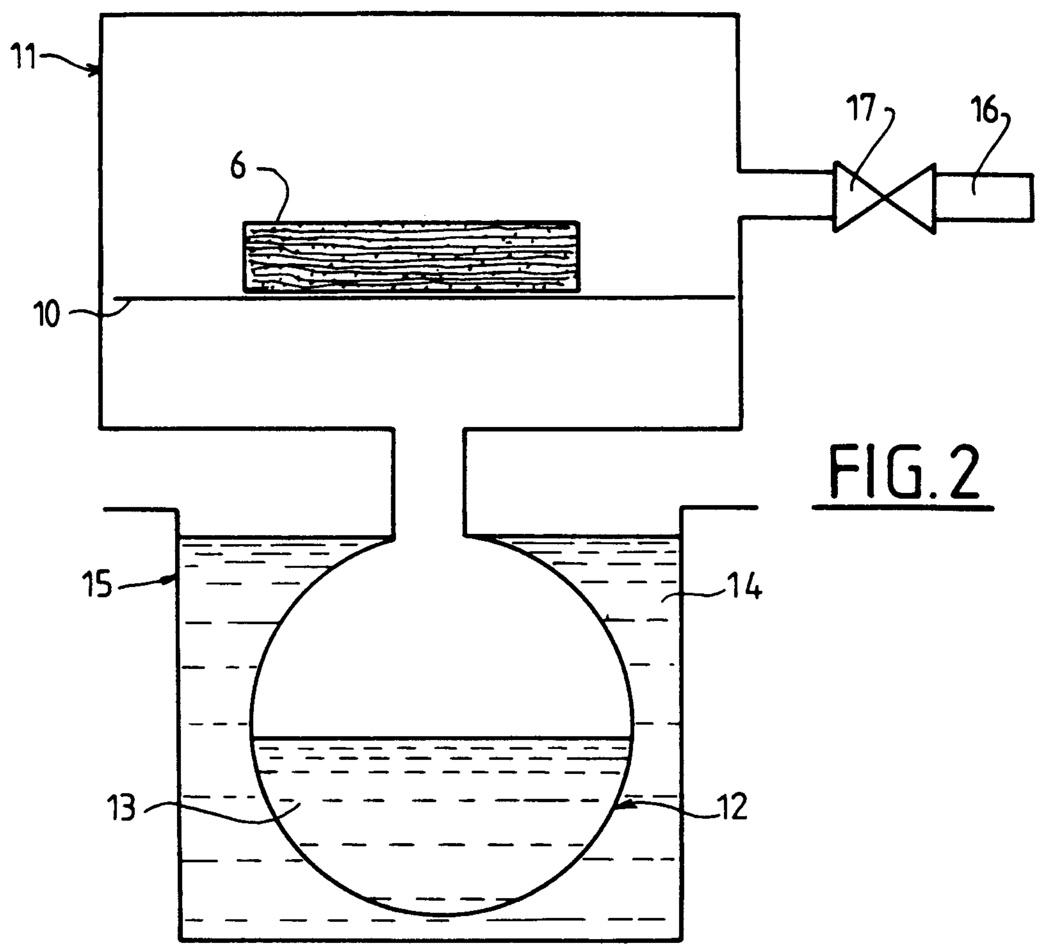


FIG.2

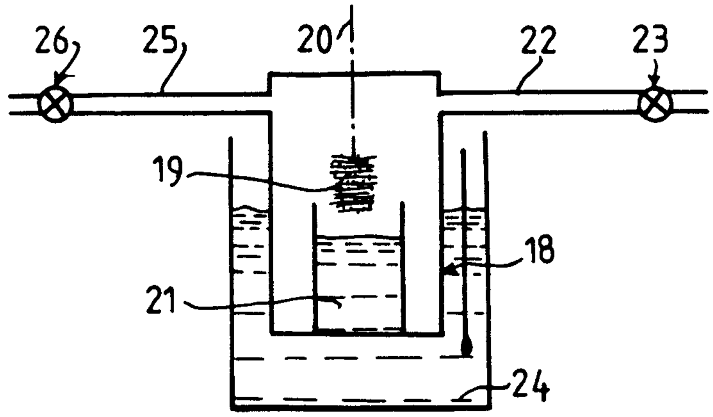


FIG.3

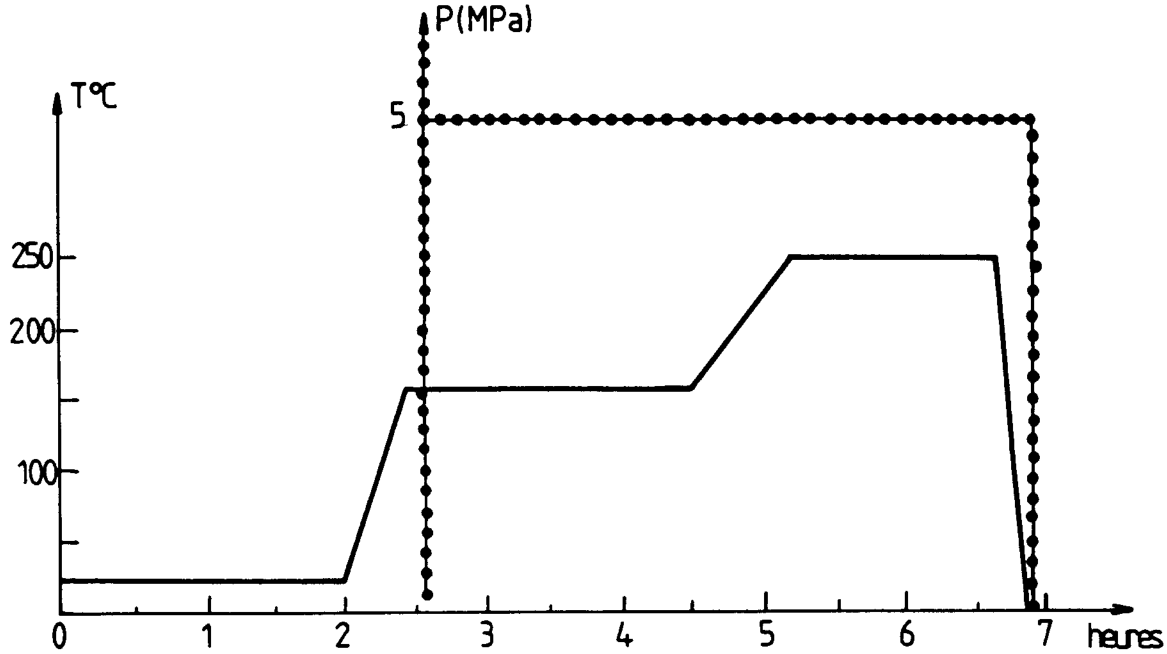
P(MPa)
T°C
5
250
200
100
0
1
2
3
4
5
6
7
heures

FIG. 4

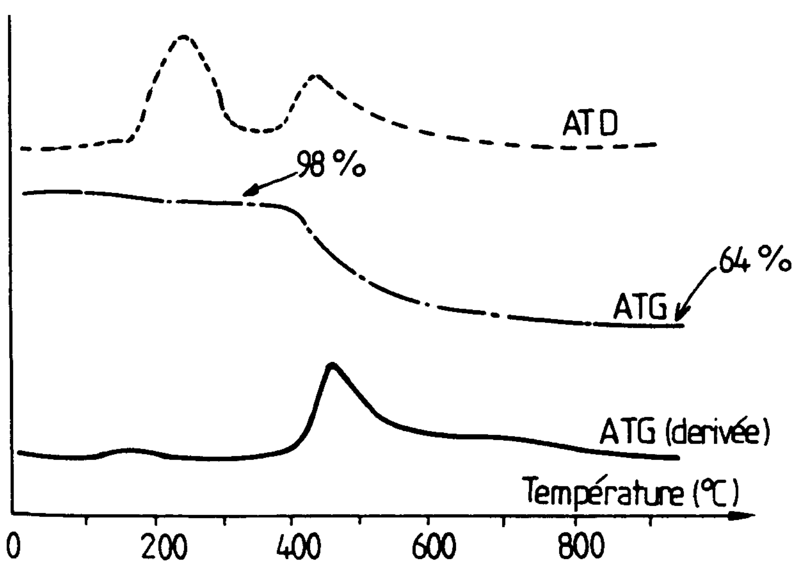
ATD
98 %
64 %
ATG
ATG (derivée)
Température (°C)
0
200
400
600
800

FIG.9

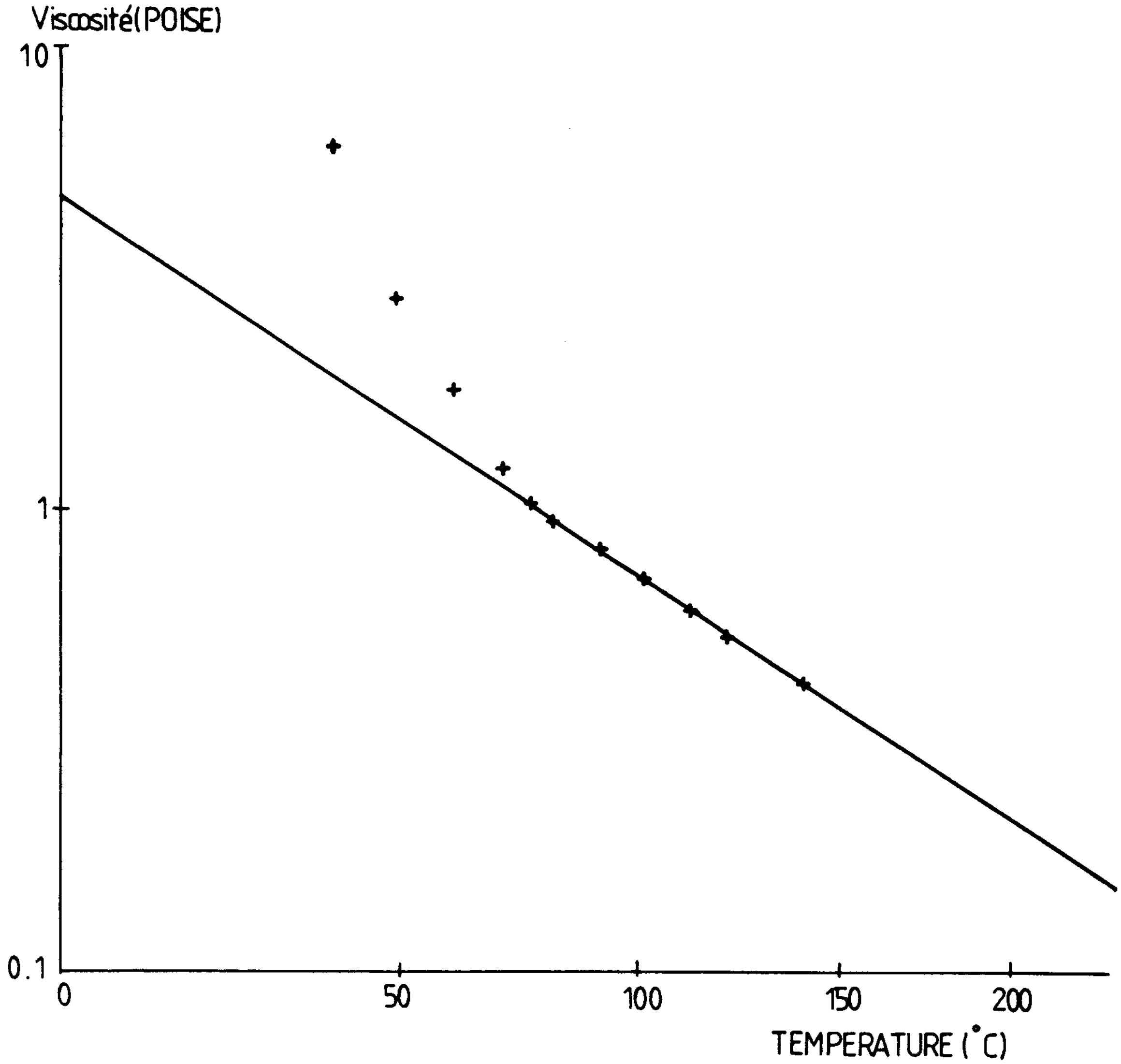


FIG.5

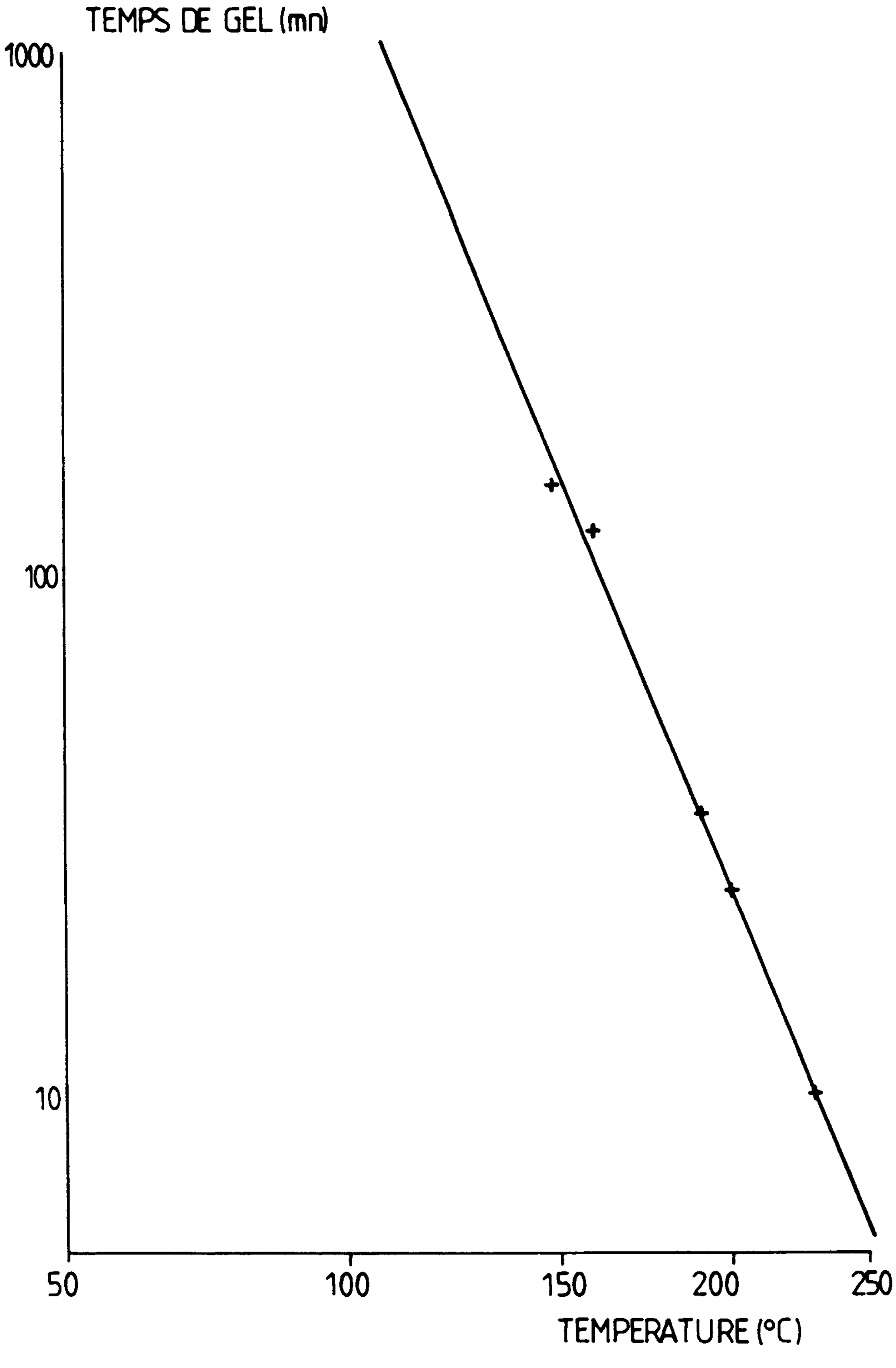


FIG.6

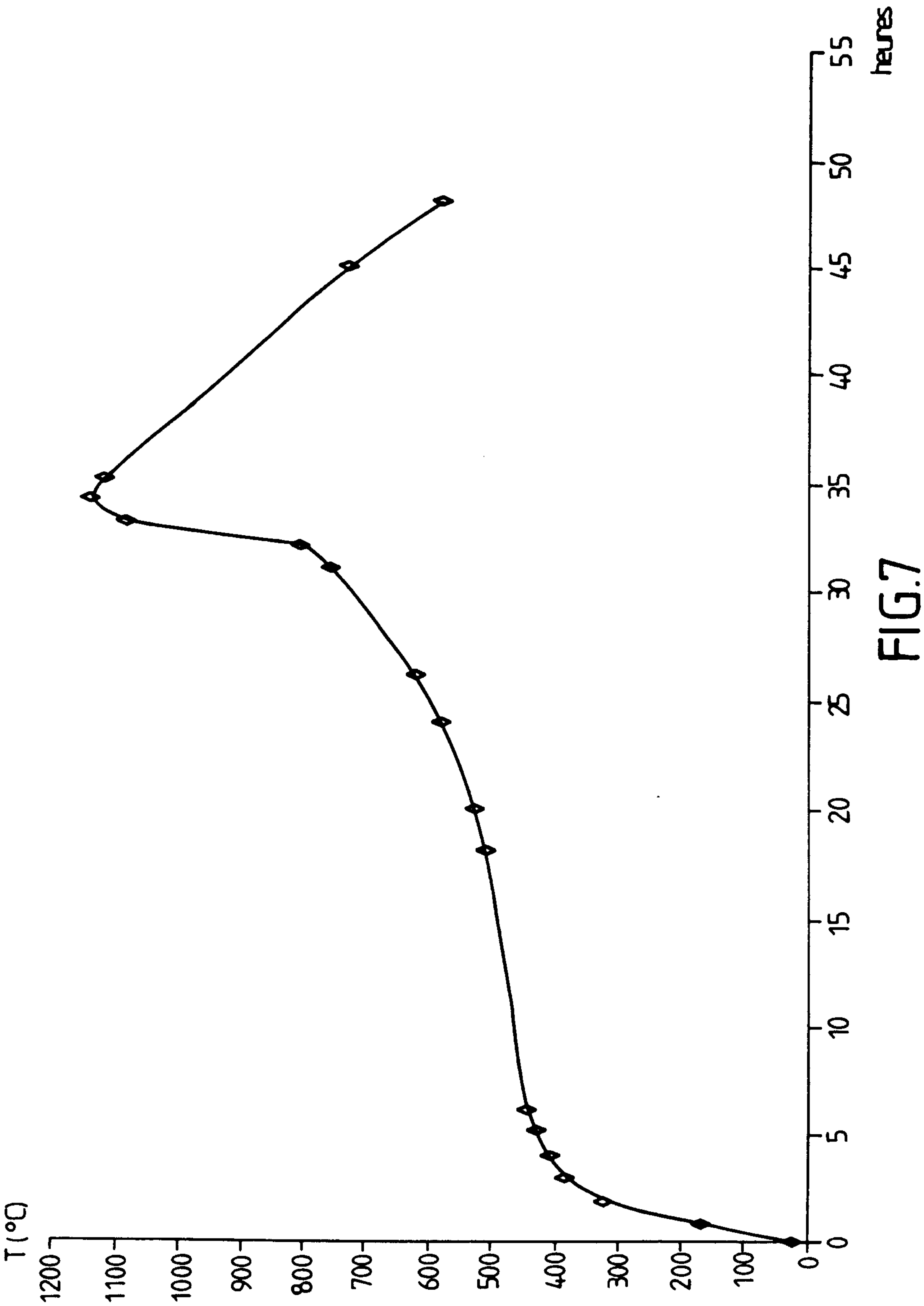
T (°C)
0
100
200
300
400
500
600
700
800
900
1000
1100
1200
0
5
10
15
20
25
30
35
40
45
50
55
heures

FIG.7

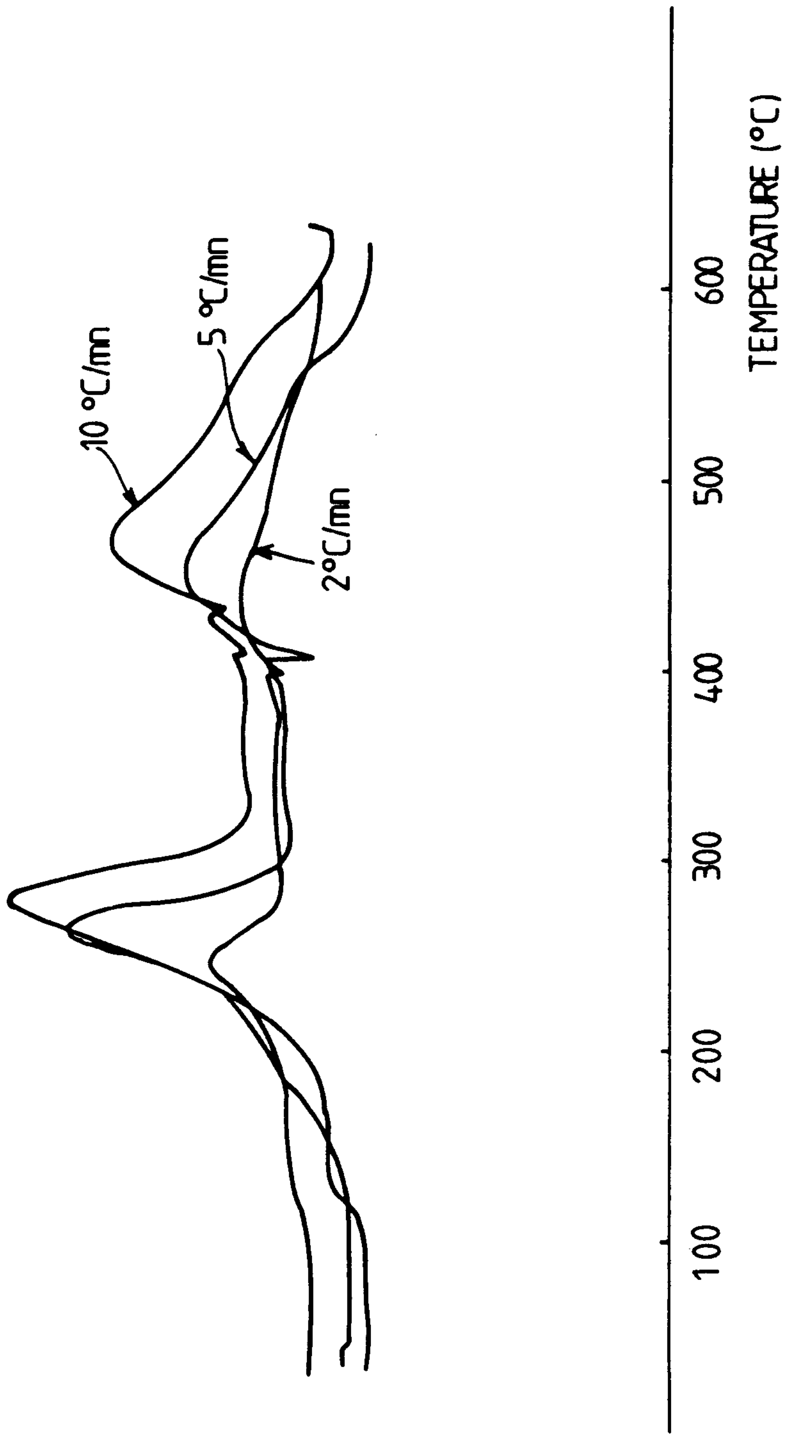


FIG.8